(19) Europäisches Patentamt / European Patent Office / Office européen des brevets

(11) **EP 4 636 188 A1**

(12) **EUROPEAN PATENT APPLICATION**

(43) Date of publication:
**22.10.2025  Bulletin 2025/43**

(21) Application number: **24170700.9**

(22) Date of filing: **17.04.2024**

(51) International Patent Classification (IPC):
**E04C 5/16** (2006.01)      **C04B 14/28** (2006.01)
**C04B 22/06** (2006.01)      **C04B 28/06** (2006.01)
**C04B 40/06** (2006.01)

(52) Cooperative Patent Classification (CPC):
(C-Sets available)
**E04C 5/165; C04B 28/06;** C04B 2111/00672
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hilti Aktiengesellschaft**
**9494 Schaan (LI)**

(72) Inventors:
• **Schönlein, Markus**
  **81249 München (DE)**
• **Eckstein, Andreas**
  **86899 Landsberg am Lech (DE)**
• **Winkler, Bernhard**
  **6800 Feldkirch (AT)**

(74) Representative: **Hilti Aktiengesellschaft**
**Corporate Intellectual Property**
**Feldkircherstrasse 100**
**Postfach 333**
**9494 Schaan (LI)**

(54) **COUPLING OF ELONGATED ELEMENTS USING A MULTI-COMPONENT MORTAR SYSTEM BASED ON BLOCKED CALCIUM ALUMINATE CEMENT**

(57)      Kit of parts for coupling at least two elongated elements comprising two ends with a coupling device, the kit of parts comprising a coupling device, and a multi-component mortar system, wherein the coupling device comprises a coupling device body, wherein the coupling device body has an axis, a wall, a hollow body portion having an inner surface, and at least two receiving openings for receiving the at least two elongated elements, wherein the coupling device body comprises at least one support element on the inner surface of the hollow body portion, and wherein the multi-component mortar system comprises a blocked aluminous cement component and an activator component comprising an alkaline and/or earth alkaline metal salt.

Figure 4

(52) Cooperative Patent Classification (CPC): (Cont.)

C-Sets
**C04B 28/06, C04B 40/0658, C04B 40/065,
C04B 22/062, C04B 22/124, C04B 22/142,
C04B 22/16, C04B 22/10, C04B 22/085,
C04B 2103/0008, C04B 14/28, C04B 22/0013;
C04B 28/06, C04B 40/0658, C04B 40/065,
C04B 22/062, C04B 22/124, C04B 22/142,
C04B 22/16, C04B 22/10, C04B 22/085,
C04B 2103/0008, C04B 14/28, C04B 24/003;
C04B 28/06, C04B 40/0658, C04B 40/065,
C04B 22/062, C04B 22/124, C04B 22/142,
C04B 22/16, C04B 22/10, C04B 22/085,
C04B 2103/0008, C04B 22/165**

**Description**

**Technical Field of the Invention**

The present application is directed towards the technical field of coupling elongated elements in a sleeve using a multi-component mortar system and a sleeve. Preferably, the present invention is directed towards such coupling in the technical field of reinforced concrete. Hence, the present invention relates to a coupling device, a method for coupling, a kit of parts for coupling, and the use of a coupling device, a kit of parts, or a multi-component mortar system for coupling elongated elements in a coupling device using a multi-component mortar system.

**Background of the Invention**

In many applications, there is the need to join to, or couple with, elongated elements. One such application is reinforced concrete where reinforcing bars, which are placed into the concrete, are typically supplied in discrete lengths. There are many locations where the reinforcing bar (rebar) must continue for a length longer than the discrete length supplied, and it becomes necessary to join multiple lengths together. One means of achieving this is to use a coupling device to join the bars together in an axial means.

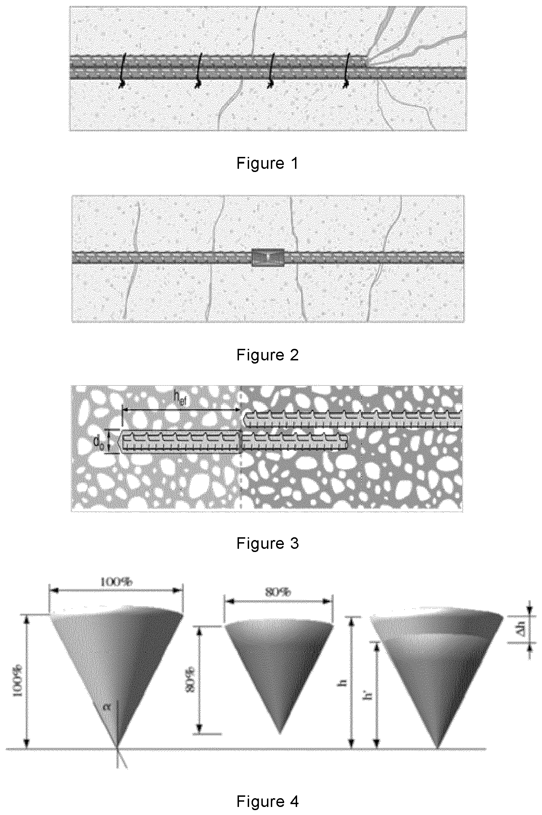

Traditionally, in reinforced concrete, lap splicing is used to connect two rebars with each other (cf. Figure 1). Thereby, two rebars are placed in a partially overlapping manner and the overlapping part is fastened e.g. by using wire. However, this traditional technique has certain drawbacks. For instance, there are applications, in which such technique is simply not feasible, e.g. when the space for overlapping the rebars is limited, in areas where lab splicing would inflict a high congestion, which makes concrete pouring impossible, or in case rebars with a diameter of more than 32 mm are used. Furthermore, the method of lap slicing affords a high amount of work to be completed.

The prior art suggests mechanical coupling devices to remedy at least a few of these problems. One solution is directed towards threaded coupling devices. These coupling devices have the disadvantage that heavy equipment is needed to provide the correct torque to the coupling device or rebar, respectively. Furthermore, applying torque is not always possible. E.g. in the situation of a rebar having an angle, even a 90° angle, the solution of a threaded coupling device fails. This problem applies to both tapered and parallel threaded coupling devices. Moreover, the rebars need to be provided with a thread as well. This either creates more challenges in the production of the rebar or affords the application of a thread onto the rebar on the construction side.

As a solution swaged coupling devices have been proposed. Therein, high mechanical force is applied to the surface of the coupling device, thereby achieving a coupling effect without the need of applying a torque. However, heavy equipment such as hydraulic presses is still needed to apply the forces needed to achieve a coupling effect. This heavy equipment must be handled on the construction site.

Furthermore, multi bolt transitional (MBT) coupling devices are suggested in the prior art to solve the problem of the threaded coupling devices, cf. US 5,046,878 A, US5,664,902 A, US 5,909,980 A. Thereby, instead of applying a force to the surface of the coupling device, the force is generated with a multitude of screws, which are screwed in the wall of the coupling device. Typically, MBT coupling devices have six or more of such screws. MBT coupling devices require exact torquing of these screws with a big torque wrench. Hence, applying an MBT coupling device still needs respectively time and manpower.

Grouted coupling devices have been mainly suggested for pre-cast parts. Thereby, the coupling devices comprise two threaded connections in the cylindrical wall for filling the coupling device and one threaded connection for the rebar in longitudinal connection of the coupling device. Typically, the coupling devices are screwed on a rebar belonging to a rebar network of a future pre-cast part. The coupling device is placed in a way into the pre-cast form to achieve that after pre-casting, the second opening for receiving a rebar and both openings for filling the coupling device are not covered by the pre-cast concrete.

**Summary of the Invention**

However, these grouted coupling devices again have the problem of a threaded coupling device. Furthermore, the threaded connections stick out of the coupling device thereby limiting the space in the neighborhood. Moreover, the filling as well as the pre-positioning is not ideal in particular in view of being used in non-pre-cast scenarios. Finally, the cementitious compositions suggested can be improved in view of mechanical strength achieved and material needed.

It has now been surprisingly found out that above-mentioned objects can be achieved with a kit of parts for coupling at least two elongated elements comprising two ends with a coupling device, the kit of parts comprising a coupling device and a multi-component mortar system, wherein the coupling device comprises a coupling device body, wherein the coupling device body has an axis, a wall, a hollow body portion having an inner surface, and at least two receiving openings for receiving the at least two elongated elements, wherein the coupling device body comprises at least one support element on the inner surface of the hollow body portion, and wherein the multi-component mortar system comprises a blocked aluminous cement component and an activator component comprising an alkaline and/or earth alkaline metal salt.

It has been further surprisingly found out that above-mentioned problem is solved by a coupling device for coupling at least two elongated elements comprising two ends, wherein the coupling device comprises a coupling device body, wherein the coupling device body has an axis, a wall, a hollow body portion having an inner surface, and at least two receiving openings for receiving the at least two elongated elements, and wherein the coupling device body comprises at least one support element on the inner surface of the hollow body portion.

Moreover, it has been surprisingly found out that above-mentioned object is achieved by a method for coupling at least two elongated elements comprising two ends with a coupling device according to the present invention, wherein the method comprises the steps of a) Inserting one end of each elongated element into one respective receiving opening of the at least two receiving openings of the coupling device, b) Putting load on the load-transition elements of the coupling device, thereby putting load on each end of the at least two elongated elements, c) Filling the hollow body portion of the coupling device with a multi-component mortar system, wherein the multi-component mortar system comprises a blocked aluminous cement component and an activator component comprising an alkaline and/or earth alkaline metal salt, d) Letting the multi-component mortar system cure.

Finally, it has been surprisingly found out that above-mentioned object is achieved by each of the uses as described in the following: Use of a multi-component mortar system for fastening at least two elongated elements comprising two ends in a coupling device according to the present invention, wherein the multi-component mortar system comprises a blocked aluminous cement component and an activator component comprising an alkaline and/or earth alkaline metal salt. Use of a coupling device according to the present invention for fastening at least two elongated elements comprising two ends with a multi-component mortar system wherein the multi-component mortar system comprises a blocked aluminous cement component and an activator component comprising an alkaline and/or earth alkaline metal salt. Use of a kits of parts according to the present invention for fastening at least two elongated elements comprising two ends.

It has been found out that the above-mentioned kit of parts, coupling device, method and uses have the advantage to provide coupling means for rebars on a construction site, which are very easy to handle and provide improved fastening properties. In particular, they remove the need for heavy equipment or tedious on-site modification of the rebars. Furthermore, it has been found that the multi-component mortar comprising a blocked aluminous cement component and an activator component comprising an alkaline and/or earth alkaline metal salt provides many advantages when used to glue rebars into a steel sleeve to connect them compared to the established methods. In particular, these advantages are improved slip reducing the risk of not being compatible with different rebar geometries. Other advantages are improved inner strength and reduced shrinkage allowing for the usage of shorter coupling device sleeves, which saves material and cost for the coupling device. Finally, high fire resistance allows for a design with lower concrete coverage, which again saves a lot of raw material and labor costs on jobsites.

## Short Description of the Figures

Figure 1    is a schematic representation of a threaded coupling device known from the prior art.

Figure 2    is a schematic representation of a swaged coupling device known from the prior art.

Figure 3    is a schematic representation of an MBT coupling device known from the prior art.

Figure 4    is a schema showing the geometrical principle underlying the calculation method for the shrinkage behavior as used herein.

## Definitions

The term "*coupling device*" device as used herein denotes a device for coupling together two or more elongated members, preferably reinforcement bars (rebars). In the majority of cases, a coupling device is suitable for coupling two elements in an axial manner. However, it may also be suitable for coupling more than two elements together, such as the formation of T-junctions or Y-junctions. Furthermore, not always an axial coupling is desired, but a coupling in an angle. It should also be appreciated that there are applications when the elements required to be joined differ in shape and size. This may include joining bars of different cross-sectional area, different shape, or different grades of material, or different deformation patterns. Preferably, the coupling device comprises at least one sleeve, which preferably is a tubular shaped sleeve. Also preferably, the material of the sleeve is a metal, preferably steel. It should be understood that in case of a coupling device for coupling two elongated members in an axial manner, the coupling device preferably comprises just one sleeve, preferably a tubular sleeve. However, in case an angled connection should be achieved and/or more than two elongated members should be coupled, the coupling device may comprise respectively more than one sleeve, preferably more than one tubular sleeve. The coupling devices known from the prior art can have fastening means, in particular screws extending through a hole with a thread in the wall of the sleeve. Furthermore, the coupling devices known from the prior art can have threads for engaging with threads on the elongated members.

Ther term "*reinforcement bars*" or "*rebars*" as used herein denotes a steel bar used as a tension device in reinforced concrete and reinforced masonry structures to strengthen and aid the concrete under tension. Concrete is usually strong under compression but has low tensile strength. The application of rebars significantly increases the tensile strength of such structures. Usually, the surface of rebars comprises a continuous series of features such as ribs, lugs or indentations to promote a better bond with the concrete and reduce the risk of slippage. The most common type of rebar is carbon steel, typically consisting of hot-rolled round bars with deformation patterns embossed into its surface. Steel and concrete have similar coefficients of thermal expansion, so a concrete structural member reinforced with steel will experience minimal differential stress as the temperature changes.

The term "*precasting*" or "*precast structure*" as used herein denotes a method for producing a construction product or the product itself, wherein the method comprises casting concrete in a reusable mold followed by curing the concrete in the form in a controlled environment. The so produced precast structures are usually transported to the construction site and connected to other parts. For a strong connection, the precast structures often have coupling devices embedded for receiving reinforcement bars from other parts.

The term "*mortar*" or "*mortar composition*" as used herein denotes a workable paste, which binds after a given time. Preferably, mortars comprise cement and become hard when cured, resulting in a rigid aggregate structure. Typically, mortar comprises sand, a hydraulic binder, and water. The most common binder since the early 20th century is Portland cement.

The term "*hydraulic binder*" as used herein denotes the component in a mortar mixture, which cures, i.e. hardens, over time, wherein the hydraulic binder cures by hydration, i.e. by absorbing water from the environment. This differentiates a hydraulic binder from other binders, which may e.g. absorb carbon dioxide from the environment for curing. Hydraulic binders are for example Roman cement, Portland cement, hydraulic lime, or aluminous cement.

The term "*aluminous cement*" as used herein denotes a calcium aluminate cement that consists predominantly of hydraulic active calcium aluminates. Alternative names are "*high-alumina cement*" or "*Ciment fondu*" in French. The main active constituent of calcium aluminate cements is monocalcium aluminate ($CaAl_2O_4$, $CaO·Al_2O_3$, or CA in the cement chemist notation). The term "*aluminous cement*" denotes both calcium aluminous cement (CAC) or calcium sulfoaluminate cement (CSA).

The term "*activator*" as used herein denotes a compound or composition that modifies the chemical environment to start a particular chemical reaction. In the present invention the activator modifies the pH-value of the mortar suspension thereby deblocking the hydraulic binder in the final mixture.

The term "*retarder*" as used herein denotes a compound or composition that modifies the chemical environment to delay a particular chemical reaction. In the present invention the retarder modifies the hydration ability of the calcium aluminate cement of the mortar suspension thereby delaying the hydraulic binder action in the final mixture.

The term "*initial set-time*" as used herein denotes the time at which the mixture of component A and component B starts to set after mixing. During the time period after mixing, the mixture stays in the form of a more or less fluid aqueous suspension or paste of solid products.

The term "*multi-component mortar system*" as used herein denotes a system comprising several components stored separately from each other, so that curing of the ingredients contained in the components occurs only after all the components have been mixed together.

The terms "a" or "an" as articles preceding a chemical compound class mean that one or more compounds falling under that chemical compound class may be meant. In a preferred embodiment, these articles mean only a single compound, the term "*at least one*" means numerically "*one or more*". In a preferred embodiment, the term numerically means "one", the terms "*include*" and "*comprising*" mean that there may be other components in addition to those mentioned. These terms are meant inclusively and therefore include "*consisting of*". "*Consisting of*" is meant conclusively and means that no further constituents may be present. In an embodiment, the terms "*comprise*" or "*comprising*" mean "*consisting of*", a range delimited by numbers, e.g., "*from* 80 °C *to* 120 °C" means that the two corner values and each value within that range are individually disclosed.

## Detailed Description of the Invention

As set out above, the present invention is concerned with a kit of parts, a coupling device, a method for coupling and several uses, which will be further explained in detail in the following. It should be understood that, while it is referred herein to reinforcing bars in concrete as a potential application for a coupling method, it should be appreciated that many other applications require coupling of elements in an axial manner, such as steel light columns, scaffolding elements, pipes, cables, and so on. Thus, the reference to reinforcing bars herein should not be seen as limiting to an application in concrete.

*Coupling device of the invention*

As also stated already above, the present invention is also concerned with a coupling device for coupling at least two elongated elements comprising two ends. In alignment with the most general embodiment of the kits of parts of the present invention, the coupling device comprises

a coupling device body, wherein the coupling device body has an axis, a wall, a hollow body portion having an inner surface, and at least two receiving openings for receiving the at least two elongated elements, and

wherein the coupling device body comprises at least one support element on the inner surface of the hollow body portion.

Hence, the coupling device can be suitable to couple more than two elongated elements. In this case, the device body will have at least two axes. It should be understood that in one preferred embodiment thereof two elongated elements are connected axially, thereby forming one axis, and a third elongated element is connected in an angle thereto, preferably perpendicular thereto forming a T-junctions. In another preferred embodiment thereof, none of the elongated elements form an axial coupling, but rather all are coupled in an angle to each other, preferably in an angle of 60°, thereby forming an Y-junction. However, preferably, the coupling device according to the present invention is suitable for receiving two elongated elements and thus the at least two receiving openings are two receiving openings.

Preferably, the wall of the coupling device of the present invention further comprises at least two load-transition openings, wherein each load-transition opening comprises one load-transition element, wherein the at least one support element on the inner surface of the hollow body portion is positioned opposite to at least one of the at least two load-transition openings. This ensures that the elongated elements are fixed in an ideal position when the mortar composition is curing. Ideally, the elongated elements should not be able to move inside the coupling device during curing. It should be further noted that the load-transition elements need to be only suitable for applying a load to the elongated element to keep it in position in contrast to coupling devices in the prior art, in which a load has to be applied to allow for force transition in the concrete structure after the concrete outside of the coupling device is cured.

In another preferred embodiment of the present invention, the of the wall of the coupling device further comprises a filling opening for filling the coupling device body. This has the advantage that the multi-component mortar composition can be inserted from a central point inside the coupling device. Thereby, it is achieved that the application of multi-component mortar system material in the coupling device is facilitated, in particular in the case when the elongated elements have already been positioned and preferably fixated by load-transition elements in the coupling device. The multi-component mortar system can be applied preferably with pressure into the filling opening thereby progressing towards the receiving openings of the coupling device. Thereby, inclusion of gas bubbles in the mortar composition can be avoided. Furthermore, the amount of mortar material to be used can be efficiently controlled and waste of material can be reduced or even eliminated. Preferably, the filling opening is positioned to have the same distance to each of the at least two receiving openings of the coupling device body, preferably is positioned at the center of gravity of the coupling body. This ensures that the multi-component mortar system material is inserted in the middle of the coupling device resulting in the same time needed for the material to progress towards the receiving openings. Thus, such a design improves the material used, as the material will arrive at the same time at each receiving opening. Even more preferably, the filling opening of the coupling device of the present invention comprises a hollow pin. The hollow pin has the advantage that elongated elements can be centered below the filling opening. After fixation of the elongated elements, the hollow pin can be removed from the filling opening for injection of the multi-component mortar.

As set out above, the coupling device according to the present invention is suitable for coupling two elongated elements. In such a preferred embodiment, the at least two load transition openings are at least four load-transition openings, preferably are four load-transition openings. In case of coupling only two elongated elements, the number of two load-transition elements per coupled elongated elements is sufficient to hold the elongated elements in position within the coupling device until the mortar composition filled therein has been cured. Furthermore, the lower the number of load-transition elements is, the faster the time for coupling, as less load-transition elements have to be fixated by the construction worker, and less material and energy is needed to produce the coupling device.

Preferably, the at least two load-transition openings of the coupling device according to the present invention are positioned on a straight line, wherein the straight line is parallel to the axis of the coupling device body. More preferably, also the filling opening of the coupling device according to the present invention is positioned on the straight line, preferably in that the same number of load-transition openings are positioned between the filling opening and each of the at least two receiving openings. This has the advantage that the handling of the coupling device, i.e. fixating and filling, can be achieved from one side, which reduces the working time.

In a preferred embodiment of the coupling device of the present invention, each of the at least two load-transition openings comprises a thread and each of the load-transition elements of the at least two load-transition openings is a screw having a thread counter fitting the thread of each of the at least two load-transition openings. Preferably, each of the screws has a tapered tip. This improves the fixating process of the elongated member, as the tip can deform the surface of the elongated member and thus provides counter measures against rotation of the elongated element in the coupling device, thereby reducing slip.

Preferably, each of the at least two receiving openings and/or the filling opening of the coupling device of the present invention comprises a seal, wherein the seal is preferably made from a polymer composition. This has the advantage that none of the mortar composition, which is injected into the coupling device, leaves the coupling device at the receiving ends. Therefore, waste of material is reduced or even eliminated.

In the coupling device of the present invention, the support elements preferably are protrusions from the inner surface of the hollow body portion, preferably are ribs extending longitudinal to the axis of the coupling device body. The mortar composition resulting from the multi-component mortar system as used in the present invention has not very high adhesion properties to steel. Hence, the support elements defined pockets in the coupling device, which are filled by the mortar composition, and which serve as fixing elements after curing. Longitudinal ribs have the additional effect of reducing or even preventing rotation of the elongated elements within the coupling device.

Likewise, preferably, the inner surface of the hollow body portion of the coupling device of the present invention comprises undercuts extending perpendicularly to the axis of the coupling device body. This has the effect of reducing or preventing longitudinal movement and thus slip of the elongated element in the coupling device. However, even if such perpendicular undercuts are not present, elongated elements in form of rebars often have perpendicularly extending rips. If such a rebar is fixated within a coupler, respective perpendicular undercuts are formed.

The preferred shape of the coupling device body of the coupling device of the present invention is a substantially cylindrical shape, preferably a cylindrical shape, and the axis of the coupling device body is preferably the symmetry axis of the cylindrical shape. This ensures an optimized material to coupling effect ratio and further saves material in the production of the coupling device. In terms of dimensions, the cylindrical shape is preferably formed to receive the elongated elements, preferably rebars. As the tensile strength of the coupler varies with its diameter, usually longer couplers are needed for rebars with larger diameter. Hence, preferably, the outer diameter of the coupler is in the range of from 1.5 to 3.0 times, preferably 1.8 to 2.5 times, the diameter of the elongated element, preferably rebar. Also preferably, the length to diameter (L/D) ratio of the coupler is preferably in the range of from 4 to 8, more preferably from 5 to 7, and most preferably from 6 to 6.5.

Generally, the material used for producing the coupling device depends on the purposed of the coupling of the elongated elements. In a preferred embodiment, the elongated elements are rebars for use in construction works, which are usually made from steel. Hence, preferably, also the coupling device body of the coupling device of the present invention is made from steel, preferably ductile cast iron.

*Multi-component mortar system of the invention*

The present invention is concerned with a kit of parts comprising a multi-component mortar system, a method of coupling at least two elongated elements using a multi-component mortar system and the use of a multi-component mortar system for coupling elongated elements. Hence the multi-component mortar system of the present invention is described in more detail in the following.

The multi-component mortar system present invention is based on the effect of using at least one alkaline and/or earth alkaline metal salt for accelerating curing of a curable aluminous cement. Hence, the multi-component mortar system comprises a component A comprising a blocked curable aluminous cement and an accelerator selected from alkaline and/or earth alkaline metal salt and component B comprising an activator selected from an alkaline and/or earth alkaline metal salt.

*a) Component A*

Component A as comprised in the multi-component mortar system according to the present invention is based on an aluminous cement. The aluminous cement comprised in the multi-component mortar system according to the present invention is preferably an aluminous cement component based on an aqueous-phase calcium aluminate cement (CAC). The aluminous cement comprised in the multi-component mortar system according to the present invention is characterized by a rapid set and a rapid hardening, a rapid drying, an excellent resistance to corrosion and to shrinkage. Such a calcium aluminate cement suitable to be used in the present invention is for example Ternal® White (Kerneos, France).

Component A as comprised in the multi-component mortar system according to the present invention comprises at least about 40 wt.-%, preferably at least about 50 wt.-%, more preferably at least about 60 wt.-%, most preferably at least about 70 wt.-%, from about 40 wt.-% to about 90 wt.-%, preferably from about 50 wt.-% to about 85 wt.-%, more preferably from about 60 wt.-% to about 82 wt.-%, most preferably from about 70 wt.-% to about 81 wt.-% of aluminous cement, based on the total weight of component A.

According to an alternative embodiment of the invention, component A as comprised in the multi-component mortar system according to the present invention comprises at least about 20 wt.-%, preferably at least about 30 wt.-%, more preferably at least about 40 wt.-%, most preferably at least about 50 wt.-%, from about 20 wt.-% to about 80 wt.-%, preferably from about 30 wt.-% to about 70 wt.-%, more preferably from about 35 wt.-% to about 60 wt.-%, most preferably from about 40 wt.-% to about 55 wt.- % of aluminous cement, based on the total weight of component A and at least about 5 wt.-%, preferably at least about 10 wt.-%, more preferably at least about 15 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.- %, most preferably from about 15 wt.-% to about 25 wt.-% of calcium sulfate, preferably calcium sulfate hemihydrate, based on the total weight of component A. In a preferred alternative embodiment of the two-component mortar system of the present invention, the ratio of $CaSO_4$/CAC of component A should be less or equal to 35:65.

The blocking agent comprised in component A as comprised in the multi-component mortar system according to the present invention is selected from the group consisting of boric acid, phosphoric acid, metaphosphoric acid, phosphorous acid and phosphonic acids, preferably is phosphoric acid or metaphosphoric acid, most preferably is phosphoric acid, in particular an 85% aqueous solution of phosphoric acid. Component A comprises at least about 0.1 wt.-%, preferably at least about 0.3 wt.-%, more preferably at least about 0.4 wt.-%, most preferably at least about 0.5 wt.-%, from about 0.1 wt.-% to about 20 wt.-%, preferably from about 0.1 wt.-% to about 15 wt.-%, more preferably from about 0.1 wt.-% to about 10 wt.-%, most preferably from about 0.3 wt.-% to about 5 wt.-% of said blocking agent, based on the total weight of component A. In a preferred embodiment, component A comprises from about 0.3 wt.-% to about 10 wt.-% of 85% aqueous solution of phosphoric acid, based on the total weight of component A.

Preferably, the aluminous cement is present in the component A as comprised in the multi-component mortar system according to the present invention in an amount higher than any of the following values: 50%, 60%, 70%, 80%, 90%, 95%, 99% or are 100% with respect to total weight of the hydraulic binder total weight in component A.

The accelerator present in the component A as comprised in the multi-component mortar system is constituted of at least one alkaline and/or earth alkaline metal salt selected from the group consisting of hydroxides, chlorides, sulfates, phosphates, monohydrogen phosphates, dihydrogen phosphates, nitrates, nitrites, carbonates and mixtures thereof, preferably the accelerator component is an alkali or earth alkaline metal salt, still preferably is a water- soluble alkali or earth alkaline metal salt, more preferably is a calcium metal salt, such as calcium hydroxide, calcium sulfate, calcium carbonate, calcium nitrate, calcium nitrite, calcium chloride, calcium formate or calcium phosphate, a sodium metal salt, such as sodium hydroxide, sodium sulfate, sodium carbonate, sodium nitrate, sodium nitrite, sodium chloride, sodium formate or sodium phosphate, or a lithium metal salt, such as lithium hydroxide, lithium sulfate, lithium sulfate monohydrate, lithium carbonate, lithium nitrate, lithium chloride, lithium formate or lithium phosphate, most preferably is sodium hydroxide, lithium sulfate or lithium sulfate monohydrate.

Component A as comprised in the multi-component mortar system according to the present invention comprises at least about 0.005 wt.-%, preferably at least about 0.01 wt.-%, more preferably at least about 0.05 wt.-%, most preferably at least about 0.1 wt.-%, from about 0.005 wt.-% to about 10 wt.-%, preferably from about 0.01 wt.-% to about 5 wt.-%, more preferably from about 0.1 wt.-% to about 1 wt.-%, most preferably from about 0.1 wt.-% to about 0.5 wt.-% of the accelerator, based on the total weight of component A.

Component A as comprised in the multi-component mortar system according to the present invention may additionally comprise a plasticizer. The plasticizer comprised in component A may be selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl™ G (Coatex, Arkema Group, France), Acumer™ 1051 (Rohm and Haas, U.K.), or Sika® ViscoCrete®-20 HE (Sika, Germany). Suitable plasticizers are commercially available products. Component A may comprise at least about 0.2 wt.-%, preferably at least about 0.3 wt.-%, more preferably at least about 0.4 wt.-%, most preferably at least about 0.5 wt.-%, from about 0.2 wt.-% to about 20 wt.-%, preferably from about 0.3 wt.-% to about 15 wt.-%, more preferably from about 0.4 wt.-% to about 10 wt.-%, most preferably from about 0.5 wt.-% to about 5 wt.-% of said plasticizer, based on the total weight of component A.

In an especially preferred embodiment of the multi-component mortar system of the present invention, component A further comprises the following characteristics, taken alone or in combination. Component A may additionally comprise a thickening agent. The thickening agents which can be used in the present invention may be selected from the group consisting of organic products, such as xanthan gum, welan gum or DIUTAN® gum (CPKelko, USA), starched-derived ethers, guar-derived ethers, polyacrylamide, carrageenan, agar, and mineral products, such as clay, and their mixtures. Suitable thickening agents are commercially available products. Component A comprises at least about 0.01 wt.-%, preferably at least about 0.1 wt.-%, more preferably at least about 0.2 wt.-%, most preferably at least about 0.3 wt.-%, from about 0.01 wt.-% to about 10 wt.-%, preferably from about 0.1 wt.-% to about 5 wt.-%, more preferably from about 0.2 wt.-% to about 1 wt.-%, most preferably from about 0.3 wt.-% to about 0.7 wt.-% of said thickening agent, based on the total weight of component A.

Component A as comprised in the multi-component mortar system according to the present invention may further comprise an antibacterial or biocidal agent. The antibacterial or biocidal agents may be selected from the group consisting of compounds of the isothiazolinone family, such as methylisothiazolinone (MIT), octylisothiazolinone (OIT) and benzoisothiazolinone (BIT) and their mixtures. Suitable antibacterial or biocidal agents are commercially available products as mentioned in the following. Exemplarily mentioned are Ecocide K35R (Progiven, France) and Nuosept OB 03 (Ashland, The Netherlands). Component A comprises at least about 0.001 wt.-%, preferably at least about 0.005 wt.-%, more preferably at least about 0.01 wt.-%, most preferably at least about 0.015 wt.-%, from about 0.001 wt.-% to about 1.5 wt.-%, preferably from about 0.005 wt.-% to about 0.1 wt.-%, more preferably from about 0.01 wt.-% to about 0.075 wt.-%, most preferably from about 0.015 wt.-% to about 0.03 wt.-% of said antibacterial or biocidal agent, based on the total weight of component A. In a preferred embodiment, component A comprises from about 0.015 wt.-% to about 0.03 wt.-% of Nuosept OB 03, based on the total weight of component A.

Alternatively, component A as comprised in the multi-component mortar system according to the present invention comprises at least one filler, in particular an organic or mineral filler. The filler which can be used in the present invention may be selected from the group consisting of quartz powder, preferably quartz powder having an averaged grain size (d50%) of about 16 pm, quartz sand, clay, fly ash, fumed silica, carbonate compounds, aluminas, pigments, titanium oxides, light fillers, and their mixtures. Suitable mineral fillers are commercially available products. Exemplarily mentioned is quartz powder Millisil W12 or W6 (Quarzwerke GmbH, Germany). Component A comprises at least about 1 wt.-%, preferably at least about 2 wt.-%, more preferably at least about 5 wt.-%, most preferably at least about 8 wt.-% of said at least one filler, based on the total weight of component A.

The water content comprised in component A as comprised in the multi-component mortar system according to the present invention is at least about 1 wt.-%, preferably at least about 5 wt.-%, more preferably at least about 10 wt.- %, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-%, based on the total weight of component A. The presence of an accelerator, plasticizer, thickening agent as well as an antibacterial or biocidal agent does not change the overall inorganic nature of the cementitious component A.

Component A comprising the aluminous cement is present in aqueous phase, preferably in form of a slurry or paste.

Component A may also comprise a retarder. The optional retarder comprised in component A as comprised in the multi-component mortar system according to the present invention may be selected from the group consisting of citric acid, tartaric acid, lactic acid, salicylic acid, gluconic acid and mixtures thereof.

*b) Component B*

Component B as comprised in the multi-component mortar system according to the present invention comprises an activator, optionally at least one retarder, optionally at least one mineral filler, and water. To ensure sufficient processing time, at least one retarder, which prevents premature hardening of the mortar composition, can be used in a distinct concentration in addition to the activator.

The activator, which is present in component B as comprised in the multi-component mortar system according to the present invention, comprises at least one alkaline and/or alkaline earth metal salt selected from the group consisting of hydroxides, chlorides, sulfates, phosphates, monohydrogen phosphates, dihydrogen phosphates, nitrates, carbonates and mixtures thereof.

In particular, the activator is constituted of at least one alkaline and/or alkaline earth metal salt selected from the group consisting of hydroxides, chlorides, sulfates, phosphates, monohydrogen phosphates, dihydrogen phosphates, nitrates, carbonates and mixtures thereof, preferably the activator component is an alkali or alkaline earth metal salt, more preferably is a calcium metal salt, such as calcium hydroxide, calcium sulfate, calcium carbonate, calcium formate, calcium nitrate or calcium phosphate, a sodium metal salt, such as sodium hydroxide, sodium sulfate, sodium carbonate, sodium nitrate or sodium phosphate, or a lithium metal salt, such as lithium hydroxide, lithium sulfate, lithium carbonate, lithium nitrate or lithium phosphate, or a potassium metal salt, such as potassium hydroxide, potassium sulfate, potassium carbonate, potassium formate, potassium nitrate or potassium phosphate, most preferably the activator is sodium hydroxide.

Component B as comprised in the multi-component mortar system according to the present invention comprises at least about 0.01 wt.-%, preferably at least about 0.02 wt.-%, more preferably at least about 0.05 wt.-%, most preferably at least about 1 wt.-%, from about 0.01 wt.-% to about 40 wt.-%, preferably from about 0.02 wt.-% to about 35 wt.-%, more preferably from about 0.05 wt.-% to about 30 wt.-%, most preferably from about 1 wt.-% to about 25 wt.-% of said activator, based on the total weight of component B. In a particular preferred embodiment, the activator is sodium hydroxide.

The water content comprised in component B as comprised in the multi-component mortar system according to the present invention is at least about 1 wt.-%, preferably at least about 5 wt.-%, more preferably at least about 10 wt.-%, most preferably at least about 20 wt.-%, from about 1 wt.-% to about 60 wt.-%, preferably from about 5 wt.-% to about 50 wt.-%, more preferably from about 10 wt.-% to about 40 wt.-%, most preferably from about 15 wt.-% to about 30 wt.-%, based on the total weight of component B.

In a particular preferred embodiment the sodium hydroxide content comprised in component B as comprised in the multi-component mortar system according to the present invention is at least about 0.1 wt.-%, preferably at least about 1 wt.-%, more preferably at least about 2 wt.-%, most preferably at least about 3 wt.-%, from about 0.1 wt.-% to about 15 wt.-%, preferably from about 1 wt.-% to about 10 wt.-%, more preferably from about 2 wt.-% to about 8 wt.- %, most preferably from about 3 wt.-% to about 6 wt.-%, based on the total weight of component B.

The at least one retarder optionally comprised in component B as comprised in the multi-component mortar system according to the present invention is selected from the group consisting of citric acid, tartaric acid, lactic acid, salicylic acid, gluconic acid and mixtures thereof, preferably is a mixture of citric acid and tartaric acid. Component B comprises at least about 0.1 wt.-%, preferably at least about 0.2 wt.-%, more preferably at least about 0.5 wt.-%, most preferably at least about 1.0 wt.-%, from about 0.1 wt.-% to about 25 wt.-%, preferably from about 0.2 wt.-% to about 15 wt.- %, more preferably from about 0.5 wt.-% to about 15 wt.-%, most preferably from about 1.0 wt.-% to about 10 wt.-% of said retarder, based on the total weight of component B. In a particularly preferred embodiment of the multi-component mortar system according to the present invention, the ratio of citric acid/tartaric acid in component B is 1.6/1.

The at least one mineral filler comprised in component B as comprised in the multi-component mortar system according to the present invention may be selected from the group consisting of limestone fillers, sand, corundum, dolomite, alkaline-resistant glass, alumina, crushed stones, gravels, pebbles and mixtures thereof, preferred are limestone fillers, such as various calcium carbonates. The at least one mineral filler is preferably selected from the group consisting of limestone fillers or quartz fillers, such as quartz powder Millisil W12 or W6 (Quarzwerke GmbH, Germany) and quartz sand. The at least one mineral filler of component B is most preferably a calcium carbonate or a mixture of calcium carbonates. Component B comprises at least about 30 wt.-%, preferably at least about 40 wt.-%, more preferably at least about 50 wt.-%, still more preferably at least about 60 wt.-%, most preferably at least about 70 wt.-%, from about 30 wt.-% to about 95 wt.-%, preferably from about 35 wt.-% to about 90 wt.- %, more preferably from about 40 wt.-% to about 85 wt.-%, still more preferably from about 45 wt.-% to about 80 wt.-%, most preferably from about 50 wt.-% to about 75 wt.-% of at least one mineral filler, based on the total weight of component B. In a particular preferred embodiment, the at least one mineral filler comprised in component B is a mixture of three different calcium carbonates, i.e. calcium carbonate fines, such as different Omyacarb® types (Omya International AG, Germany). Most preferably, the first calcium carbonate has an average particle size (d50%) of about 3.2 pm and a residue of 0.05% on a 45 pm sieve (determined according to ISO 787/7). The second calcium carbonate has an average particle size (d50%) of about 7.3 pm and a residue of 0.5% on a 140 pm sieve (determined according to ISO 787/7). The third calcium carbonate has an average particle size (d50%) of about 83 pm and a residue of 1.0% on a 315 pm sieve (determined according to ISO 787/7).

In a particularly preferred alternative embodiment of the multi-component mortar system according to the present invention, the at least one mineral filler comprised in component B is a mixture of three different quartz fillers. Most preferably, the first quartz filler is a quartz sand having an average particle size (d50%) of about 240 pm. The second quartz filler is a quartz powder having an average grain size (d50%) of about 40 pm. The third quartz filler is a quartz powder having an average grain size (d50%) of about 15 pm.

In an especially preferred embodiment of the multi-component mortar system according to the present invention, component B further comprises the following characteristics, taken alone or in combination. Component B may additionally comprise a thickening agent. The thickening agent to be used in the present invention may be selected from the group consisting of bentonite, silicon dioxide, quartz, thickening agents based on acrylate, such as alkali-soluble or alkali-swellable emulsions, fumed silica, clay and titanate chelating agents or combinations thereof. Exemplarily mentioned are polyvinyl alcohol (PVA), hydrophobically modified alkali soluble emulsions (HASE), hydrophobically modified ethylene oxide urethane polymers known in the art as HEUR, and cellulosic thickeners such as hydroxymethyl cellulose (HMC), hydroxyethyl cellulose (HEC), hydrophobically- modified hydroxy ethyl cellulose (HMHEC), sodium carboxymethyl cellulose (SCMC), sodium carboxymethyl 2-hydroxyethyl cellulose, 2-hydroxypropyl methyl cellulose, 2-hydroxyethyl methyl cellulose, 2-hydroxybutyl methyl cellulose, 2-hydroxyethyl ethyl cellulose, 2-hydoxypropyl cellulose, attapulgite clay, and mixtures thereof. Suitable thickening agents are commercially available products, such as Optigel WX (BYK- Chemie GmbH, Germany), Rheolate 1 (Elementis GmbH, Germany) and Acrysol ASE- 60 (The Dow Chemical Company). Component B comprises at least about 0.01 wt.-%, preferably at least about 0.05 wt.-%, more preferably at least about 0.1 wt.-%, most preferably at least about 0.3 wt.-%, from about 0.01 wt.-% to about 15 wt.-%, preferably from about 0.05 wt.-% to about 10 wt.-%, more preferably from about 0.1 wt.-% to about 5 wt.-%, most preferably from about 0.3 wt.-% to about 1 wt.-% of said thickening agent, based on the total weight of component B.

The presence of a retarder and thickening agent does not change the overall inorganic nature of component B. Component B may also comprise a plasticizer or dispersing agent. These are known to a person skilled in the art.

Component B as comprised in the multi-component mortar system according to the present invention is present in aqueous phase, preferably in form of a slurry or paste.

It is preferred that the pH-value of component B as comprised in the multi-component mortar system according to the present invention is above 10, more preferably above 11 and most preferably is above 12, in particular in the range between 10 and 14, preferably between 11 and 13.

It is particular preferred that the proportions of water in component A and component B as comprised in the multi-component mortar system according to the present invention are chosen so that the water to aluminous cement ratio (W/CAC) or water to calcium sulfoaluminate cement (W/CAS), in the product obtained by mixing components A and B is lower than 1.5, preferably between 0.2 and 1.2, most preferably between 0.25 and 0.7. In a preferred embodiment, the ratio of water to calcium aluminate cement comprising calcium sulfate $(W/(CAC+CaSO_4))$ in the product obtained by mixing components A and B is 0.30.

Moreover, it is particular preferred that the proportion of lithium in component A as comprised in the multi-component mortar system according to the present invention is chosen so that the lithium to aluminous cement ratio (Li/CAC) and lithium to calcium sulfoaluminate cement (Li/CAS), in the product obtained by mixing components A and B is lower than 0.05, preferably between 0.00005 and 0.05, most preferably between 0.0001 and 0.001. In a particular preferred embodiment, the proportion of lithium sulfate monohydrate in component A is chosen so that the ratio of calcium aluminate cement comprising calcium sulfate to lithium sulfate monohydrate $((CAC+CaSO_4)/Li_2SO_4 \times H_2O)$ in the product obtained by mixing components A and B is in the range of from 50:1 to 2,000:1, more preferably the ratio is 300:1 to 1,500:1, even more preferably in the range of 500:1 to 600:1.

Moreover, it is particular preferred that the proportion of retarder in component B as comprised in the multi-component mortar system according to the present invention is chosen so that the citric acid/tartaric acid to aluminous cement ratio and citric acid/tartaric acid to calcium sulfoaluminate cement, in the product obtained by mixing components A and B is lower than 0.1, preferably between 0.005 and 0.08, most preferably between 0.007 and 0.3.

*c) Component A and Component B*

In a most preferred embodiment of the multi-component system according to the present invention, component A comprises or consists of the following components:

- 70 to 85 wt.-% of aluminous cement as hydraulic binder,
- 0.5 to 1.5 wt.-% of phosphoric acid as blocking agent,
- 0.05 to 2.0 wt.% of lithium sulfate or lithium sulfate monohydrate as accelerator,
- 0.5 to 1.5 wt.-% of plasticizer,
- 0.001 to 0.05 wt.-% of an antimicrobial or biocidal agent, optionally 5 to 20 wt.-% of mineral fillers, and
- 15 to 25 wt.-% of water.

In a most preferred embodiment, component B comprises or consists of the following components:

- 0.1 wt.-% to 5 wt.-% of sodium hydroxide as activator,
- 0.05 wt.-% to 5 wt.-% of citric acid as retarder,
- 0.05 wt.-% to 4 wt.-% of tartaric acid as retarder,
- 5 wt.-% to 45 wt.-% of a first mineral filler,
- 15 wt.-% to 25 wt.-% of a second mineral filler,
- 10 wt.-% to 20 wt.-% of a third mineral filler,
- 0.01 wt.-% to 0.5 wt.-% of a thickening agent,
- optionally further filler, and
- 15 wt.-% to 25 wt.-% of water.

Component A as comprised in the multi-component mortar system according to the present invention may be prepared as follows: The phosphor-containing blocking agent is mixed with water, so that the pH-value of the resulting mixture is about 2. Plasticizer and antibacterial/biocidal agent are added, and the mixture homogenized. Aluminous cement, optionally calcium sulfate, and optionally mineral filler are premixed and added stepwise to the mixture whilst increasing the stirring speed, so that the pH-value of the resulting mixture is below 7. Finally, accelerator and thickening agent are added and mixed until complete homogenization of the mixture.

Component B as comprised in the multi-component mortar system according to the present invention may be prepared as follows: The activator is dissolved in deionized water, followed by subsequent addition of retarder(s) and thickening agent and optionally mineral filler(s) under stirring until the mixture homogenizes, obtaining finally a smooth, liquid pasty slurry, the pH being above 12.

Component A and B as comprised in the multi-component mortar system according to the present invention are present in aqueous phase, preferably in form of a slurry or paste. In particular, components A and B have a pasty to fluid aspect according to their respective compositions. In one preferred embodiment, component A and component B are in paste form thereby preventing sagging at the time of mixing the two components.

The weight ratio between component A and component B (A/B) as comprised in the multi-component mortar system according to the present invention is preferentially comprised between 7/1 and 1/3, preferably is 3/1. Preferably, the composition of the mixture comprises 75 wt.-% of component A and 25 wt.-% of component B. In an alternative embodiment, the composition of the mixture comprises 25 wt.-% of component A and 75 wt.-% of component B. The multi-component mortar system is of mineral nature, which is not affected by the presences of additional thickening agents of other agents.

It is preferred that the mortar composition resulting from the multi-component mortar system according to the present invention after mixing of components A and B has an initial set-time of at least 5 min, preferably of at least 10 min, more preferably of at least 15 min, most preferably of at least 20 min, in particular in the range of from about 5 to 25 min, preferably in the range of about 10 to 20 min.

In the multi-component mortar system according to the present invention, especially the two-component mortar system, the volume ratio of component A to component B is in the range of from 1:1 to 7:1, preferably 3:1. In an alternative embodiment, the volume ratio of component A to component B is 1:3 to 1:2.

*Kit of parts of the invention*

As set out above, the present invention is concerned with a kit of parts for coupling at least two elongated elements comprising two ends with a coupling device, the kit of parts comprising

- a coupling device, and
- a multi-component mortar system,

 wherein the coupling device comprises a coupling device body,

 wherein the coupling device body has an axis, a wall, a hollow body portion having an inner surface, and at least two receiving openings for receiving the at least two elongated elements,

 wherein the coupling device body comprises at least one support element on the inner surface of the hollow body portion, and

 wherein the multi-component mortar system comprises a blocked aluminous cement component and an activator component comprising an alkaline and/or earth alkaline metal salt.

Preferably, the multi-component mortar system of the kit of parts of the present invention is a multi-component mortar system according to the present invention as detailed above.

Likewise, preferably, the coupling device of the kit of parts of the present invention is a coupling device according to the present invention as detailed above

Preferably, the kit of parts according to the present invention further comprises a filling means for the multi-component mortar system. While the coupling devices can be filled without any special device, such filling devices can facilitate handling, improve precision, and save material. It is also possible to fill the coupling devices before inserting the elongated members. However, in such a case, mortar composition material will be pushed out of the coupling device, needs to be removed and is lost. Hence, it is preferred that the kit of part is suitable for filling the coupling device after the rebars have been inserted. It should also be noted that the multi-component mortar, once applied, i.e. mixed with each other, defines a certain period, in which it will be cured. Hence, prefilling the coupling devices has the drawback that the curing time is limited. After being produced separately, component A and component B of the multi-component mortar system are introduced into separate containers, from which they are ejected by means of the filling means and are guided through a mixing device, which is typically a mixing tip of the filling means. The multi-component mortar system is preferably a ready-to-use system, whereby component A and B are separately arranged from each other in a multi-chamber device, such as a multi-chamber cartridge and/or a multi-chamber cylinder or in two-component capsules, preferably in a two-chamber cartridge or in two- component capsules. The multi-chamber system preferably includes two or more foil bags for separating curable component A and initiator component B. The contents of the chambers or bags which are mixed by a mixing device, preferably via a static mixer, can be injected into a borehole. The assembly in multiple chamber cartridges or pails or sets of buckets is also possible.

Preferably, the filling means is suitable for pre-mixing the components of the multi-component mortar system and applying them into the coupling device. Hence, more preferably, the filling means is a multi-chamber dispenser for instantly mixing and applying the multi-component mortar system. Even more preferably, the filling means is a manual dispenser for instantly mixing and applying the multi-component mortar system and most preferably, the dispenser is a manual, such as HDM 500, or a cordless multi-chamber dispenser provided by Hilti AG, such as HDE 500. These dispensers allow for an ideal control of mixing an application of the multi-component mortar composition.

Furthermore, the kit of parts preferably further comprises a means for putting load on the load-transition elements of the coupling device. This is in particular useful for coupling devices having at least one load-transition element. More preferably, the means for putting load on the load-transition element is suitable for putting a controlled load on the load-transition element, preferably a controlled torque in case the load-transition element is a screw, or a controlled impulse in case the load-transition element is a nail or rivet. Even more preferably, the means for putting load on the load-transition element is a torque wrench, wherein the torque wrench can be a manual torque wrench or an impact wrench. Still even more preferably, the means for putting load on the load-transition element is an impact wrench, and most preferably an impact wrench provided by the Hilti AG, such as ISW 4AT-22, SIW 8-22, SIW 6-22, SIW 10-22, SIW 2-A12, or SIW 22T-A. These impact wrenches allow for an improved and facilitated handling of putting load on the load-transition elements.

Preferably, in the kit of parts according to the present invention, each of the at least two elongated elements is a rebar. More preferably, the at least two elongated elements are only two elongated elements. Most preferably, the kit of parts of the present invention is suitable for axially connecting two elongated elements.

*Method of the present invention*

As also set out above, the present invention is concerned with a method for coupling at least two elongated elements comprising two ends with a coupling device, wherein the method comprises the steps of:

a) Inserting one end of each elongated element into one respective receiving opening of the at least two receiving openings of the coupling device,

b) Putting load on the load-transition elements of the coupling device, thereby putting load on each end of the at least two elongated elements,

c) Filling the hollow body portion of the coupling device with a multi-component mortar system, wherein the multi-component mortar system comprises a blocked aluminous cement component and an activator component comprising an alkaline and/or earth alkaline metal salt,

d) Letting the multi-component mortar system cure

wherein the coupling device comprises a coupling device body,

wherein the coupling device body has an axis, a wall, a hollow body portion having an inner surface, and at least two receiving openings for receiving the at least two elongated elements,

wherein the coupling device body comprises at least one support element on the inner surface of the hollow body portion.

Preferably, the multi-component mortar system of the method of the present invention is a multi-component mortar system according to the present invention as detailed above.

Likewise, preferably, the coupling device of the method of the present invention is a coupling device according to the present invention as detailed above.

Preferably, in the method according to the present invention, the wall of the coupling device further comprises a filling opening for filling the coupling device body, and in step c) of the method according to the present invention, the coupling device is filled through the filling opening.

Preferably, in step d) of the method according to the present invention, the multi-component mortar system is cured for at least 5 min, preferably for at least 10 min, more preferably for at least 15 min, most preferably for at least 20 min, in particular for a period in the range of from about 5 to 25 min, preferably in the range of about 10 to 20 min.

*Use of the present invention*

The present invention is concerned with the use of a multi-component mortar system for fastening at least two elongated elements comprising two ends in a coupling device, wherein the multi-component mortar system comprises a blocked aluminous cement component and an activator component comprising an alkaline and/or earth alkaline metal salt, and wherein the coupling device comprises a coupling device body, wherein the coupling device body has an axis, a wall, a hollow body portion having an inner surface, and at least two receiving openings for receiving the at least two elongated elements, wherein the coupling device body comprises at least one support element on the inner surface of the hollow body portion.

Use of a coupling device for fastening at least two elongated elements comprising two ends with a multi-component mortar system, wherein the multi-component mortar system comprises a blocked aluminous cement component and an activator component comprising an alkaline and/or earth alkaline metal salt, and wherein the coupling device comprises a coupling device body, wherein the coupling device body has an axis, a wall, a hollow body portion having an inner surface, and at least two receiving openings for receiving the at least two elongated elements, wherein the coupling device body comprises at least one support element on the inner surface of the hollow body portion.

Use of a kits of parts for fastening at least two elongated elements comprising two ends, wherein the kit of parts comprises:

- a coupling device, and
- a multi-component mortar system,

  wherein the coupling device comprises a coupling device body,

  wherein the coupling device body has an axis, a wall, a hollow body portion having an inner surface, and at least two receiving openings for receiving the at least two elongated elements,

  wherein the coupling device body comprises at least one support element on the inner surface of the hollow body portion, and

  wherein the multi-component mortar system comprises a blocked aluminous cement component and an activator component comprising an alkaline and/or earth alkaline metal salt.

Preferably, the multi-component mortar system of the uses of the present invention is a multi-component mortar system according to the present invention as detailed above.

Likewise, preferably, the coupling device of the uses of the present invention is a coupling device according to the present invention as detailed above.

Finally, preferably, the kit of parts of the uses of the present invention is a kit of parts according to the present invention as detailed above.

**Experimental Part**

*Measurement Methods*

*a) Shrinkage behavior*

Mortars were characterized with respect to their shrinkage behavior by using a laser-driven shrinkage cone method by Schleibinger GmbH derived from DIN EN 12390.

For the shrinkage characterization, the mortars were mixed and poured into a Teflon cone. A reflector plate was placed on top of the mortar and the starting distance of the mortar to the laser calibrated as baseline. Then, the distance of the reflector plate to the laser was monitored over a period of 24h.

The shrinkage of the mortars was calculated according to the following formulas (I) to (IV) (with reference to Figure 4):

$$V = \frac{1}{3}\pi r^2 h; \ V' = \frac{1}{3}\pi r'^2 h' \qquad\qquad (I)$$

$$r = h\tan(\alpha) \rightarrow V = \frac{1}{3}(h\tan(\alpha))^2 h \qquad\qquad (II)$$

$$\alpha = const \rightarrow V = ch^3; \ V' = ch'^3 \qquad\qquad (III)$$

$$\frac{V\prime}{V} = \frac{h\prime^3}{h^3} \rightarrow \frac{h\prime}{h} = \sqrt[3]{\frac{V\prime}{V}} \qquad\qquad (IV)$$

wherein

V, V'  volume of the filled cone (initial and shrunk)
r, r'  radius of the filled cone at the circular surface at the top (initial and shrunk)
h, h'  height of the cone (initial and shrunk)

Under the assumption of an isotropic shrinkage radius r and height h of the cone are changed about the same percentage: $h' = k * h$ and $r' = k * r$ (whereby k could be e.g. 80%) during shrinkage.

*b) Inner strength*

Mortars were characterized with respect to their inner strength by a pull-out test of a rebar from a steel sleeve. Therefore, the respective mortar was injected into a Hilti HIS-sleeve of diameter 20 mm and then a rebar with a diameter of 12 mm was inserted to an embedment depth of 50 mm. After curing for a defined time, a confined pull-out test was performed and the force at the failure load was recorded.

*c) Mechanical performance in a seismic test*

The coupling device sleeve used for characterization of the seismic performance of the mortars is made of cast-iron, exhibited a length of 330 mm, an outer diameter of 57 mm, and an inner diameter of 25 mm. The inner part of the coupling device sleeve exhibits 12 pockets with a width of 6 mm and a depth of 3 mm to provide undercuts for the mortar. The coupling device sleeve has a filling opening in the middle of the coupling device sleeve with respect to the height of the cylindrical shape of the coupling device sleeve. Four fixing holes with threads each applied with a M14 screw are together with the filling opening evenly distributed along a line parallel to the axis of the cylindrical shape of the coupling device sleeve. Hence, on each half of the line two fixing holes with threads are positioned and in the middle the filling opening.

For preparation of the rebar coupling device seismic test according to NZS3101 and ISO 15835, two rebars of the BS500 grade having a diameter of 20 mm and a length of 0.5 m were inserted in the opening of each side of the coupling sleeve until they touched each other in the middle. Then each rebar was fixed with the M14 screws through the fixing holes with threads applying a torque force of 150 Nm with a calibrated torque wrench. Subsequently, a two-component mortar was injected into the opening in the middle of the sleeve until the mortar reached the openings on the side, where the rebars are inserted. The system was cured for seven days at ambient temperature. After the curing time, the coupled rebar system was placed into a test rig and was tested according to ISO 15835-1 and ISO 15835-2. The results were evaluated according to ISO 15835:2009 with respect to force and slip. To pass the seismic test, following criteria must be met:

u4 ≤ 0.3 mm
u8 ≤ 0.6 mm

*Examples*

*a) Preparation of Component A*

19.33 g of deionized water, 0.75 g of 85% phosphoric acid (blocking agent), 0.6 g Ethacryl G ® (polycarboxylate ether based superplasticizer, commercially available from the Arkema Group), and 0.02 g Nuosept ® OB 03 (biocide, commercially available from the Arxada - Troy Corporation) were homogenized at room temperature, and whilst stirring with a dissolver, the calcium aluminate cement (78.50 g, pure Ternal White ®, calcium aluminate cement, commercially available from the Imerys Group) is added in subsequent small portions, to obtain finally a smooth, liquid pasty slurry of the blocked cement in water, the pH being below 7. After addition of the calcium aluminate cement, 0.15 g of lithium sulfate were added.

*Table 1: Composition of component A:*

|  | IE1 [wt.-%]* |
| --- | --- |
| Water | 19.33 |
| Ternal White | 78.5 |

(continued)

| | IE1 [wt.-%]* |
|---|---|
| 85% aq. $H_3PO_4$ | 0.75 |
| Xanthan Gum | 0.50 |
| Sodium gluconate | 0.15 |
| Ethacryl G | 0.6 |
| Nuosept OB 03 | 0.02 |
| Lithium sulfate | 0.15 |
| * with respect to the total weight of component A | |

b) Preparation of Component B

In the respective amount deionized water, 4.0 g of NaOH pellets (Activator), 0.65 g of Ecodis® P50 (superplasticizer), 0.4 g Optigel® WX (thickener), 1.93 g of citric acid, and 1.20 g of tartaric acid were dissolved. Whilst stirring with a dissolver, the mixture of the following fillers was added in subsequent portions: 34.00 g of calcite Omyacarb 130 AL, 15.39 g of Omyacarb 15 AL, 9.0 g of Omyacarb 2 AL, and 13.0 g of calcite Calofort U, thereby obtaining a smooth, liquid pasty slurry having a pH value of above 12.

*Table 2: Composition of different activator components B:*

| | IE1 [wt.-%]* |
|---|---|
| Water | 20.43 |
| NaOH (s) | 4.00 |
| Citric acid | 1.93 |
| Tartaric acid | 1.20 |
| Ecodis P50 | 0.65 |
| Omyacarb 130 | 34.00 |
| Omyacarb 15 | 15.39 |
| Omyacarb 2 | 9.00 |
| Calofort U | 13.00 |
| Optigel WX | 0.40 |
| * with respect to the total weight of component B | |

c) Preparation of Mortars

After the preparation of the single components, the corresponding A- and B-components were filled into plastic hard cartridges in a mixing ratio of A:B component = 3:1. The hard cartridge was placed into a dispenser.

For comparison, the commercially available products RE500 V4 (CE1) and FP700 R (CE2) from Hilti Deutschland AG were used.

d) Results

To characterize the performance of the used two-component mortar systems, the shrinkage, the inner strength, and the mechanical performance in a coupling device sleeve have been determined, as outlined in Table 3.

*Table 3: Results of the examples*

| | | CE1 | CE2 | IE1 |
|---|---|---|---|---|
| Shrinkage | [%] | 3.0 | 5.5 | 2.2 |

(continued)

|  |  | CE1 | CE2 | IE1 |
|---|---|---|---|---|
| Inner strength | [MPa] | 39.7 | 20 | 28.3 |
| u4 | [mm] | -0.18 | 0.30 | 0.1 |
| u8 | [mm] | -0.1 | 0.41 | 0.2 |

The results show that all mortars fulfill the criteria according to ISO 15835-1 and ISO 15835-2. Mortars possessing an inner strength of more than 25 MPa and a shrinkage of less than 4% show significantly lower slip (u4 and u8) compared to the FP700 R mortar (CE2), which just passes the test and thus exhibits the risk of not being compatible with different rebar geometries. Furthermore, the mortars with high inner strength and low shrinkage allow using a shorter coupling device sleeve, which saves material and cost for the coupling device. While the epoxy-amine mortar (RE500 V4, CE1) allows for earlier loading and excels in seismic performance, the cementitious mortars possess high resistance in case of fire and maintain their performance. This allows for a design with lower concrete coverage, which saves a lot of raw material and labor costs on jobsites.

**Claims**

1. Kit of parts for coupling at least two elongated elements comprising two ends with a coupling device, the kit of parts comprising:

   a coupling device, and
   a multi-component mortar system,
   wherein the coupling device comprises a coupling device body,
   wherein the coupling device body has an axis, a wall, a hollow body portion having an inner surface, and at least two receiving openings for receiving the at least two elongated elements,
   wherein the coupling device body comprises at least one support element on the inner surface of the hollow body portion, and
   wherein the multi-component mortar system comprises a blocked aluminous cement component and an activator component comprising an alkaline and/or
   earth alkaline metal salt.

2. The kit of parts according to claim 1, wherein the kit of parts further comprises a filling means for the multi-component mortar system, wherein the filling means preferably is a multi-chamber dispenser.

3. Coupling device for coupling at least two elongated elements comprising two ends, wherein the coupling device comprises a coupling device body,

   wherein the coupling device body has an axis, a wall, a hollow body portion having an inner surface, and at least two receiving openings for receiving the at least two elongated elements, and
   wherein the coupling device body comprises at least one support element on the inner surface of the hollow body portion.

4. The kits of parts according to any of the preceding claims 1 or 2 or the coupling device according to claim 3, wherein the wall further comprises at least two load-transition openings,

   wherein each load-transition opening comprises one load-transition element, wherein the at least one support element on the inner surface of the hollow body portion is positioned opposite to at least one of the at least two load-transition openings, and
   wherein the wall further comprises a filling opening for filling the coupling device body.

5. The kit of parts according to claim 4, wherein the kit of parts further comprises a means for putting load on the load-transition elements of the coupling device, wherein the means for putting load on the load-transition elements preferably is an impact wrench.

6. The kit of parts according to any of the preceding claims 1, 2, 4, or 5 or the coupling device according to any of the preceding claims 3 or 4, wherein the inner surface of the hollow body portion comprises undercuts extending perpendicularly to the axis of the coupling device body.

7. Method for coupling at least two elongated elements comprising two ends with a coupling device according to any of the preceding claims 3, 4, or 6, wherein the method comprises the steps of:

   a) Inserting one end of each elongated element into one respective receiving opening of the at least two receiving openings of the coupling device,
   b) Putting load on the load-transition elements of the coupling device, thereby putting load on each end of the at least two elongated elements,
   c) Filling the hollow body portion of the coupling device with a multi-component mortar system, wherein the multi-component mortar system comprises a blocked aluminous cement component and an activator component comprising an alkaline and/or earth alkaline metal salt,
   d) Letting the multi-component mortar system cure.

8. Use of a multi-component mortar system for fastening at least two elongated elements comprising two ends in a coupling device according to any of the preceding claims 3, 4, or 6, wherein the multi-component mortar system comprises a blocked aluminous cement component and an activator component comprising an alkaline and/or earth alkaline metal salt.

9. Use of a coupling device according to any of the preceding claims 3, 4, or 6 for fastening at least two elongated elements comprising two ends with a multi-component mortar system, wherein the multi-component mortar system comprises a blocked aluminous cement component and an activator component comprising an alkaline and/or earth alkaline metal salt.

10. Use of a kits of parts according to any of the preceding claims 1, 2, or 4 to 6 for fastening at least two elongated elements comprising two ends.

11. The kit of parts according to any of the preceding claims 1, 2, or 4 to 6, the method according to claim 7, or the use according to any of the preceding claims 8 to 10, wherein component A of the multi-component mortar system comprises the blocked aluminous cement component and further comprises at least one blocking agent selected from the group consisting of phosphoric acid, metaphosphoric acid, phosphorous acid, boric acid and phosphonic acids, and wherein component B comprises the activator component comprising an alkaline and/or earth alkaline metal salt.

12. The kit of parts according to claim 11, the method according to claim 11, or the use according to claim 11, wherein component B further comprises at least one retarder, at least one mineral filler and water.

13. The kit of parts according to claims 11 or 12, the method according to claims 11 or 12, or the use according to claims 11 or 12, wherein component A comprises an accelerator component comprising at least one alkali and/or earth alkaline metal salt.

14. The kit of parts according to any of the preceding claims 11 to 13, the method according to any of the preceding claims 11 to 13, or the use according to any of the preceding claims 11 to 13, wherein the least one alkali and/or earth alkaline metal salt of the accelerator component of component A is selected from the group consisting of hydroxides, chlorides, sulfates, phosphates, monohydrogen phosphates, dihydrogen phosphates, nitrates, carbonates and mixtures thereof, preferably is lithium hydroxide, lithium sulfate, lithium sulfate monohydrate, lithium carbonate, lithium nitrate, lithium chloride, lithium formate or lithium phosphate, and most preferably is lithium sulfate or lithium sulfate monohydrate.

15. The kit of parts according to any of the preceding claims 11 to 14, the method according to any of the preceding claims 11 to 14, or the use according to any of the preceding claims 11 to 14, wherein the activator component consists of sodium hydroxide.

Figure 1

Figure 2

Figure 3

Figure 4

EP 4 636 188 A1

Europäisches
Patentamt

European
Patent Office

Office européen
des brevets

# EUROPEAN SEARCH REPORT

**Application Number**

EP 24 17 0700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 116 272 A1 (HILTI AG [LI]) 11 January 2023 (2023-01-11) * the whole document * | 1-15 | INV. E04C5/16 C04B14/28 C04B22/06 |
| X | EP 4 242 188 A1 (HILTI AG [LI]) 13 September 2023 (2023-09-13) * the whole document * | 1-15 | C04B28/06 C04B40/06 |
| X | US 4 666 326 A (HOPE PAUL F [GB]) 19 May 1987 (1987-05-19) | 3-6 | |
| A | * figures 1-4 * | 1,2,7-15 | |

**TECHNICAL FIELDS SEARCHED (IPC)**

E04C
C04B

The present search report has been drawn up for all claims

| Place of search | Date of completion of the search | Examiner |
|---|---|---|
| The Hague | 12 September 2024 | Petrinja, Etiel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 0700

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2024

| Patent document cited in search report | | Publication date | Patent family member(s) | | Publication date |
|---|---|---|---|---|---|
| EP 4116272 | A1 | 11-01-2023 | CA | 3218560 A1 | 12-01-2023 |
| | | | EP | 4116272 A1 | 11-01-2023 |
| | | | EP | 4367077 A1 | 15-05-2024 |
| | | | JP | 2024523390 A | 28-06-2024 |
| | | | US | 2024294431 A1 | 05-09-2024 |
| | | | WO | 2023280572 A1 | 12-01-2023 |
| EP 4242188 | A1 | 13-09-2023 | AU | 2023229881 A1 | 25-07-2024 |
| | | | EP | 4242188 A1 | 13-09-2023 |
| | | | WO | 2023169881 A1 | 14-09-2023 |
| US 4666326 | A | 19-05-1987 | HK | 32791 A | 10-05-1991 |
| | | | US | 4666326 A | 19-05-1987 |

EPO FORM P0459

For more details about this annex : see Official Journal of the European Patent Office, No. 12/82

**EP 4 636 188 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5046878 A
- US 5664902 A
- US 5909980 A